# EUROPEAN PATENT APPLICATION

(11) **EP 3 815 549 A1**
(43) Date of publication of application: **05.05.2021**
(21) Application number: 19826587.8
(22) Date of filing: 28.06.2019
(51) Int. Cl.: A23L 35/00

(54) **FROZEN GYOZA AND METHOD FOR PRODUCING SAME**

(30) Priority: 29.06.2018 JP 2018124136
(71) Applicant: AJINOMOTO CO., INC., Chuo-ku Tokyo 104-8315 (JP)
(72) Inventor: HIRAE, Shogo, Oura-gun, Gunma 370-0523 (JP); KAWAMURA, Kohei, Oura-gun, Gunma 370-0523 (JP)
(74) Representative: Strehl Schübel-Hopf & Partner
(86) International application number: PCT/JP2019/025866
(87) International publication number: WO 2020/004632

(57) **Abstract**

Provided is a frozen gyoza dumpling that can afford a gyoza dumpling having good wings (gyoza dumpling with wing) that easily spread on a cooking device when heating with the cooking device, etc., do not easily break during peeling off from the cooking device after cooking, and do not easily soften when the gyoza dumpling is placed with the fried surface facing upward.

A frozen gyoza dumpling with a composition attached thereto in a frozen state, the composition containing a modified starch having a viscosity of less than 5 mPa•s as measured by method A defined in the present specification and a protein.

## Description

### [Technical Field]

The present invention relates to a frozen gyoza dumpling and a production method thereof. The present invention also relates to a composition to be attached to a gyoza dumpling. Furthermore, the present invention relates to a production method of a gyoza dumpling with wing.

### [Background Art]

Frozen gyoza dumpling is one of the frozen food products highly popular among the consumers. The cooking method thereof generally includes heating (steaming and frying, etc.) in a cooking device such as a frying pan and the like to give a fried gyoza dumpling. A fried gyoza dumpling with a crunchy and crispy "wing" (also called "BARI", etc.) on the fried surface or its surrounding area tends to be popular. Thus, various methods have conventionally been proposed to form a preferable wing from a fried gyoza dumpling.

For example, it has been reported that a wing of a gyoza dumpling that is preferable in texture and appearance can be produced using oxidized starch and/or acid-treated starch prepared under certain conditions as a coating material of a gyoza dumpling (patent document 1).

### [Document List]

### [Patent document]

patent document 1: JP-A-2007-319160

### [Summary of Invention]

### [Technical Problem]

It is desirable that a liquid (e.g., batter liquid, etc.) that creates the wing of gyoza dumpling easily spreads on a cooking device such as a frying pan and the like, so that large wings that look good can be formed, when the gyoza dumpling is heated on the cooking device. However, the greater the spread of the liquid that creates the wings, the thinner the created wings become to have lower strength. As a result, problems occur in that the wings easily break during peeling off from the cooking device, and the wings bend (soften) over time when the gyoza dumplings are dished up with the fried surface and the created wings facing upward. Therefore, it was extremely difficult to create a wing that simultaneously achieves easy spreadability during heating with a cooking device or the like, and resistance to breakage during peeling off from the cooking device after cooking and resistance to easy bending (softening) over time.

The present invention has been made in view of the aforementioned situation and the problem to be solved is provision of a frozen gyoza dumpling that can afford a gyoza dumpling having good wings (gyoza dumpling with wing) that easily spread on a cooking device when heating with the cooking device, etc., do not easily break during peeling off from the cooking device after cooking, and do not easily soften when the gyoza dumpling is placed with the fried surface facing upward.

### [Solution to Problem]

The present inventors have conducted intensive studies in an attempt to solve the aforementioned problem and found that a good wing having all the properties conventionally difficult to achieve simultaneously, that is, the wing easily spreads on a cooking device when heating with the cooking device, etc., does not easily break during peeling off from the cooking device after cooking, and does not easily soften when placed with the fried surface facing upward, can be formed by combining modified starch having a particular viscosity measured by a given method (the below-mentioned method A) and a protein. They have conducted further studies and completed the present invention.

That is, the present invention provides the following.
[1] A frozen gyoza dumpling with a composition attached thereto in a frozen state, the composition comprising a modified starch having a viscosity of less than 5 mPa.s as measured by the following method (hereinafter to be referred to as method A), and
   a protein:
   viscosity measurement method:
   modified starch is added to water to a concentration of 5 wt%, the mixture is heated to 90°C, maintained for 10 min, cooled to 50°C, and the viscosity at said temperature is measured using a B-type viscometer.
[2] The frozen gyoza dumpling of [1], wherein the aforementioned protein is at least one selected from the group consisting of a soybean protein, a wheat protein, a corn protein, a porcine plasma protein, an Enoki mushroom protein and a lactoprotein.
[3] The frozen gyoza dumpling of [1] or [2], wherein the aforementioned protein is at least one selected from the group consisting of a soybean protein and a wheat protein.
[4] The frozen gyoza dumpling of any one of [1] to [3], wherein the aforementioned modified starch is at least one selected from the group consisting of an acid-treated starch, an oxidized starch and an acetylated oxidized starch.
[5] The frozen gyoza dumpling of any one of [1] to [3], wherein the aforementioned modified starch is an acid-treated starch.
[6] The frozen gyoza dumpling of any one of [1] to [5], wherein a content of the aforementioned modified starch in the aforementioned composition is 1.5 - 12 wt%.
[7] The frozen gyoza dumpling of any one of [1] to [6],
   wherein a content of the protein in the aforementioned composition is 0.2 - 4 wt%.
[8] The frozen gyoza dumpling of any one of [1] to [7],
   wherein the aforementioned composition further comprises water, an oil and an emulsifier.
[9] The frozen gyoza dumpling of any one of [1] to [8],
   wherein the aforementioned composition is for forming a wing of a gyoza dumpling.
[10] A method for producing a frozen gyoza dumpling comprising freezing a gyoza dumpling with a composition attached thereto, the composition comprising a modified starch having a viscosity of less than 5 mPa•s as measured by the following method (hereinafter to be referred to as method A), and
   a protein:
   viscosity measurement method:
   modified starch is added to water to a concentration of 5 wt%, the mixture is heated to 90°C, maintained for 10 min, cooled to 50°C, and the viscosity at said temperature is measured using a B-type viscometer.
[11] The production method of [10], wherein the aforementioned protein is at least one selected from the group consisting of a soybean protein, a wheat protein, a corn protein, a porcine plasma protein, an Enoki mushroom protein and a lactoprotein.
[12] The production method of [10] or [11], wherein the aforementioned protein is at least one selected from the group consisting of a soybean protein and a wheat protein.
[13] The production method of any one of [10] to [12], wherein the aforementioned modified starch is at least one selected from the group consisting of an acid-treated starch, an oxidized starch and an acetylated oxidized starch.
[14] The production method of any one of [10] to [12], wherein the aforementioned modified starch is an acid-treated starch.
[15] The production method of any one of [10] to [14], wherein a content of the aforementioned modified starch in the aforementioned composition is 1.5 - 12 wt%.
[16] The production method of any one of [10] to [15], wherein a content of the protein in the aforementioned composition is 0.2 - 4 wt%.
[17] The production method of any one of [10] to [16], wherein the aforementioned composition further comprises water, an oil and an emulsifier.
[18] The production method of any one of [10] to [17], wherein the aforementioned composition is for forming a wing of a gyoza dumpling.
[19] A composition to be attached to a gyoza dumpling, the composition comprising a modified starch having a viscosity of less than 5 mPa•s as measured by the following method (hereinafter to be referred to as method A), and
   a protein:
   viscosity measurement method:
   modified starch is added to water to a concentration of 5 wt%, the mixture is heated to 90°C, maintained for 10 min, cooled to 50°C, and the viscosity at said temperature is measured using a B-type viscometer.
[20] The composition of [19], wherein the aforementioned protein is at least one selected from the group consisting of a soybean protein, a wheat protein, a corn protein, a porcine plasma protein, an Enoki mushroom protein and a lactoprotein.
[21] The composition of [19] or [20], wherein the aforementioned protein is at least one selected from the group consisting of a soybean protein and a wheat protein.
[22] The composition of any one of [19] to [21], wherein the aforementioned modified starch is at least one selected from the group consisting of an acid-treated starch, an oxidized starch and an acetylated oxidized starch.
[23] The composition of any one of [19] to [21], wherein the aforementioned modified starch is an acid-treated starch.
[24] The composition of any one of [19] to [23], wherein a content of the aforementioned modified starch is 1.5 - 12 wt%.
[25] The composition of any one of [19] to [24], wherein a content of the protein is 0.2 - 4 wt%.
[26] The composition of any one of [19] to [25], further comprising water, an oil and an emulsifier.
[27] The composition of any one of [19] to [26], wherein the aforementioned composition is for forming a wing of a gyoza dumpling.
[28] A method for producing a gyoza dumpling with wing comprising heating a gyoza dumpling with a composition attached thereto, the composition comprising a modified starch having a viscosity of less than 5 mPa•s as measured by the following method (hereinafter to be referred to as method A), and
   a protein:
   viscosity measurement method:
   modified starch is added to water to a concentration of 5 wt%, the mixture is heated to 90°C, maintained for 10 min, cooled to 50°C, and the viscosity at said temperature is measured using a B-type viscometer.
[29] The production method of [28], wherein the aforementioned protein is at least one selected from the group consisting of a soybean protein, a wheat protein, a corn protein, a porcine plasma protein, an Enoki mushroom protein and a lactoprotein.
[30] The production method of [28] or [29], wherein the aforementioned protein is at least one selected from the group consisting of a soybean protein and a wheat protein.
[31] The production method of any one of [28] to [30], wherein the aforementioned modified starch is at least one selected from the group consisting of an acid-treated starch, an oxidized starch and an acetylated oxidized starch.
[32] The production method of any one of [28] to [30], wherein the aforementioned modified starch is an acid-treated starch.
[33] The production method of any one of [28] to [32], wherein a content of the aforementioned modified starch in the aforementioned composition is 1.5 - 12 wt%.
[34] The production method of any one of [28] to [33], wherein a content of the protein in the aforementioned composition is 0.2 - 4 wt%.
[35] The production method of any one of [28] to [34], wherein the aforementioned composition further comprises water, an oil and an emulsifier.
[36] The production method of any one of [28] to [35], wherein the aforementioned composition is for forming a wing of a gyoza dumpling.

### [Advantageous Effects of Invention]

According to the present invention, a frozen gyoza dumpling that can afford a gyoza dumpling having a good wing (gyoza dumpling with wing) that easily spreads on a cooking device when heating with the cooking device, etc., does not easily break during peeling off from the cooking device after cooking, and does not easily soften when placed with the fried surface facing upward, and a production method thereof can be provided.

According to the present invention, a composition that can be preferably used for forming the aforementioned good wing of a gyoza dumpling (composition to be attached to gyoza dumpling, preferably composition for forming gyoza dumpling wing) can be provided.

According to the present invention, a production method of a gyoza dumpling having the aforementioned good wings (gyoza dumpling with wing) can be provided.

### [Description of Embodiments]

### (Frozen gyoza dumpling of the present invention)

One of the characteristics of the frozen gyoza dumpling of the present invention is that a composition containing a modified starch and a protein (sometimes to be referred to as "the composition of the present invention" in the present specification) is attached in a frozen state.

In the present invention, the "frozen gyoza dumpling" refers to a gyoza dumpling itself in a frozen state, or a frozen food product containing at least a gyoza dumpling in a frozen state. In other words, therefore, the frozen gyoza dumpling of the present invention is also a frozen food product containing at least a gyoza dumpling in a frozen state, and the composition of the present invention attached in a frozen state to the gyoza dumpling.

The "gyoza dumpling" in the present invention is not limited by its shape, production method and the like and can widely include those generally called gyoza dumpling. It typically refers to food products that have at least a filling (mixture of ground meat, vegetable, seasoning and the like) and an outer skin (dough made by adding water to flour, etc., kneading, and spreading thinly) that wraps the filling. The "gyoza dumpling" in the present invention may be a filling wrapped with the outer skin and yet to be heated, or that after a heat treatment (e.g., steaming, frying, etc.), and is a concept including both of these. In the present invention, a gyoza dumpling with a filling wrapped with the outer skin and yet to be heated is sometimes referred to as a "raw gyoza dumpling" for convenience, and a gyoza dumpling after a heat treatment is sometimes referred to as a "heated gyoza dumpling" for convenience. The "gyoza dumpling" in the present invention also includes a gyoza dumpling in a chilled state (chilled gyoza dumpling). The weight of one gyoza dumpling is not particularly limited and is generally about 10 - 45 g.

In the present invention, the "modified starch" refers to starch subjected to at least one processing treatment selected from the group consisting of a physical treatment, a chemical treatment, and an enzymatical treatment. Examples of the starch subjected to a chemical treatment include acetylated distarch adipate, acetylated distarch phosphate, acetylated oxidized starch, starch sodium octenylsuccinate, starch acetate, oxidized starch, hydroxypropyl starch, hydroxypropyl distarch phosphate, phosphated distarch phosphate, monostarch phosphate, distarch phosphate and the like. Examples of the starch subjected to a physical treatment (including simple chemical treatments of the level of hydrolysis such as acid treatment, alkaline treatment, bleaching treatment and the like) include pregelatinized starch, heat-moisture treated starch, oil coated starch, acid-treated starch, alkaline treated starch, bleached starch and the like. Examples of the starch subjected to an enzymatical treatment include enzyme-treated starch and the like. The kind of the modified starch to be used in the present invention, is not particularly limited as long as it is edible, and starch subjected to at least one processing treatment selected from the group consisting of a physical treatment and a chemical treatment is preferred. Heat-moisture treated starch, acid-treated starch, oxidized starch and acetylated oxidized starch are more preferred, acid-treated starch, oxidized starch and acetylated oxidized starch are further preferred, and acid-treated starch is particularly preferred. These modified starches may be subjected to one processing treatment selected from the group consisting of a physical treatment, a chemical treatment and an enzymatical treatment, or may be subjected to not less than two processing treatments selected from the group consisting of a physical treatment, a chemical treatment and an enzymatical treatment.

The kind of the starch to be used as a material of modified starch is not particularly limited. For example, it is tapioca starch, corn starch, waxy corn starch, high-amylose corn starch, potato starch, waxy potato starch, sweet potato starch, rice starch, glutinous rice starch, taro starch, sago starch or the like. At least one selected from the group consisting of sweet potato starch, tapioca starch, corn starch, waxy corn starch, high-amylose corn starch, potato starch and waxy potato starch is preferred, at least one selected from the group consisting of tapioca starch, corn starch, waxy corn starch, high-amylose corn starch and potato starch is more preferred, at least one selected from the group consisting of corn starch, waxy corn starch and high-amylose corn starch is particularly preferred, and at least one selected from the group consisting of corn starch and waxy corn starch is most preferred.

The modified starch contained in the composition of the present invention preferably has a particular viscosity measured by the following method (sometimes to be referred to as "method A" for convenience in the present invention). viscosity measurement method (method A):
Modified starch is added to water to a concentration of 5 wt%, the mixture is heated to 90°C, maintained for 10 min, cooled to 50°C, and the viscosity at said temperature is measured using a B-type viscometer.

In method A, the water to which the modified starch is added may be appropriately stirred before heating to form a suspension, and the water that evaporates when the suspension is heated to 90°C and maintained for 10 min may be supplemented as appropriate before cooling to 50°C and the like.

In method A, the method of heating the aqueous suspension of modified starch is not particularly limited, and the heating can be performed using, for example, a steamer, a steam oven, a hot-water bath, or the like. In addition, the cooling method is not particularly limited, either, and the cooling can be performed using, for example, a hot-water bath or the like.

In method A, the B-type viscometer is a digital viscometer LR99102 (manufactured by BROOKFIELD), and the measurement is performed using a No. 1 rotor at a rotation speed of 20 rpm at 30 seconds after the start of rotation.

The viscosity of the modified starch as measured by method A is preferably less than 5 mPa.s, more preferably not more than 4.8 mPa.s, further preferably not more than 4.0 mPa• s, particularly preferably not more than 3.0 mPa.s, because the composition of the present invention easily spreads on a cooking device when the frozen gyoza dumpling of the present invention is heated by the cooking device, etc., and a large wing that looks good can be formed. While the lower limit of the viscosity of the modified starch as measured by method A is not particularly limited, it is generally not less than 0.1 mPa•s.

The production method of the modified starch used in the present invention is not particularly limited, and a modified starch produced by a method known per se or a method analogous thereto may be used. The viscosity of the modified starch as measured by method A can be adjusted by, for example, appropriately changing the treatment conditions (e.g., adjusting degree of crosslinking, adjusting the degree of lowering molecular weight, and the like) when modified starch is prepared by a processing treatment (e.g., physical treatment, chemical treatment, enzymatical treatment etc.) of the materials of starch. As the modified starch, a commercially available product having a particular viscosity as measured by method A may be used, and such use is convenient and preferable.

The modified starch contained in the composition of the present invention is not particularly limited as long as the viscosity measured by method A is within the aforementioned range. An acid-treated starch using waxy corn starch as the material (sometimes to be referred to as acid-treated waxy corn starch in the present specification), oxidized starch using potato starch as the material (sometimes to be referred to as oxidized potato starch in the present specification), or acetylated oxidized starch using tapioca starch as the material (sometimes to be referred to as oxidized acetylated oxidized tapioca starch in the present specification) is preferable.

The content of the modified starch having a particular viscosity as measured by method A (sometimes to be referred to as "modified starch A" in the present invention for convenience) in the composition of the present invention is preferably not less than 1.5 wt%, more preferably not less than 1.8 wt%, still more preferably not less than 2 wt%, further preferably not less than 2.5 wt%, particularly preferably not less than 2.7 wt%, of the composition of the present invention because a wing that does not easily break or easily soften can be formed. The content is preferably not more than 12 wt%, more preferably not more than 10 wt%, further preferably not more than 9 wt%, particularly preferably not more than 8 wt%, of the composition of the present invention because a wing that spreads easily can be formed.

Examples of the protein to be used in the present invention include wheat protein, barley protein, rice protein, corn protein, soybean protein, mung bean protein, adzuki bean protein, porcine plasma protein, Enoki mushroom protein, lactoprotein and the like. It is preferably soybean protein, wheat protein, corn protein, porcine plasma protein, Enoki mushroom protein, or lactoprotein, more preferably, wheat protein, or soybean protein, because a wing that is less likely to break or soften and spreads more easily can be formed.

The production method of the protein to be used in the present invention is not particularly limited, and one produced by a method known per se or a method analogous thereto can be used. A commercially available product may be used, and such use is convenient and preferable. The protein to be used in the present invention does not need to be completely purified and, for example, crudely purified product, a material containing a protein (e.g., grain flour, etc.) or the like may be used.

The content of the protein in the composition of the present invention is preferably not less than 0.2 wt%, more preferably not less than 0.25 wt%, further preferably not less than 0.35 wt%, particularly preferably not less than 0.45 wt%, of the composition of the present invention because a wing that does not easily break or easily soften can be formed. The content is preferably not more than 4 wt%, more preferably not more than 3.5 wt%, particularly preferably not more than 3.2 wt%, of the composition of the present invention because a wing that spreads easily can be formed.

The composition of the present invention may further contain, in addition to modified starch and protein, at least one selected from the group consisting of water, oil and emulsifier.

When the composition of the present invention contains water, the content of water in the composition of the present invention is preferably not less than 65 wt%, more preferably not less than 68 wt%, further preferably not less than 70 wt%, particularly preferably not less than 75 wt%, of the composition of the present invention, because it prevents gyoza dumpling from being charred, affords preferable texture of the outer skin of the gyoza dumpling and can form a wing that does not easily break or easily soften. The content is preferably not more than 90 wt%, more preferably not more than 85 wt%, particularly preferably not more than 80 wt%, of the composition of the present invention, because it affords preferable texture of the filling (e.g., vegetable, etc.) of the gyoza dumpling and can form a wing that does not easily break or easily soften.

The oil contained in the composition of the present invention is not particularly limited as long as it is edible. An oil that lacks flowability at ordinary temperature is sometimes referred generally to as "fat". The oil in the present invention is a concept also including fat. Specific examples of the oil that can be contained in the composition of the present invention include vegetable oils such as canola oil, soybean oil, safflower oil (including high linoleic safflower oil), corn oil, rape seed oil, sesame oil, flaxseed oil, sunflower oil, peanuts oil, cottonseed oil, olive oil, rice oil, palm oil, rice-bran oil, perilla oil, grapeseed oil and the like; animal oils such as lard, beef tallow, chicken oil, mutton tallow, horse tallow, fish oil, whale oil, butter and the like; hydrogenated oils thereof (shortening, etc.) and the like. The oil that can be contained in the composition of the present invention is preferably vegetable oil, more preferably canola oil, soybean oil or rape seed oil. Only one kind of these oils may be used, or two or more kinds thereof may be used in combination.

When the composition of the present invention contains oil, the content of the oil in the composition of the present invention is preferably not less than 5 wt%, more preferably not less than 8 wt%, further preferably not less than 10 wt%, particularly preferably not less than 12 wt%, of the composition of the present invention, because it prevents gyoza dumpling from being charred and can form a wing that does not easily break or easily soften. The content is preferably not more than 29.5 wt%, more preferably not more than 25 wt%, further preferably not more than 23 wt%, particularly preferably not more than 20 wt%, of the composition of the present invention, because it prevents oil splash during cooking and can form a wing that does not easily break or easily soften.

The emulsifier that can be contained in the composition of the present invention is not particularly limited as long as it is edible. For example, lecithin, enzyme-degraded lecithin, sugar ester, mono glycerol, propylene glycol fatty acid ester, polyglycerol fatty acid ester and the like can be recited. Only one kind of these emulsifiers may be used, or two or more kinds thereof may be used in combination.

While a protein derived from grain sometimes has an emulsifying action, it is not included in the emulsifier in the present invention.

When the composition of the present invention contains an emulsifier, the content of the emulsifier in the composition of the present invention is preferably not less than 0.01 wt%, more preferably not less than 0.05 wt%, particularly preferably not less than 0.08 wt% of the composition of the present invention in order to achieve the desired emulsifying action. The content is preferably not more than 1.5 wt%, more preferably not more than 1.2 wt%, particularly preferably not more than 1.0 wt%, of the composition of the present invention, because the desired emulsifying action is obtained in proportion to the content.

The composition of the present invention preferably further contains, in addition to modified starch and protein, water, oil and emulsifier. In this case, when the ratio (wt%) of each of these components to the total content of modified starch A, protein, water, oil and emulsifier in the composition of the present invention is defined as a - e, respectively, the ratio of a - e(a:b:c:d:e) is preferably a (modified starch A):b (protein):c (water):d (oil):e (emulsifier) = 0.5 - 20:0.05 - 10:65 - 95:3 - 25:0.01 - 3, more preferably, a:b:c:d:e=1 - 15:0.1 - 7:70 - 90:7 - 23:0.05 - 1, particularly preferably, a:b:c:d:e=1.5 - 12:0.2 - 5:72 - 83:10 - 21:0.07 - 0.5, because a wing that does not easily break or easily soften can be formed and a wing that spreads more easily can be formed.

The composition of the present invention may contain an emulsification adjuvant in addition to the modified starch and protein. The emulsification adjuvant that can be contained in the composition of the present invention is not particularly limited as long as it is edible and, for example, dried whole egg, egg white powder, powdered skim milk and the like can be recited. When the composition of the present invention contains an emulsification adjuvant, the content of the emulsification adjuvant in the composition of the present invention is generally 0.05 - 1.5 wt%, preferably 0.1 - 0.5 wt%, of the composition of the present invention.

The composition of the present invention may optionally contain, for example, soy sauce, salts, saccharides, amino acids, gums, celluloses and the like in addition to the modified starch and protein. The optional components of the composition of the present invention are not limited to these and components generally contained in the batter liquid of gyoza dumpling and the like may be used as long as the purpose of the present invention is not impaired.

The preparation method of the composition of the present invention is not particularly limited, and it can be prepared by a method known per se or a method analogous thereto. For example, when the composition of the present invention contains modified starch, protein, water, oil and emulsifier, the composition can be prepared by stirring these by a commercially available mixing and stirring device or the like, and the like.

The composition of the present invention may or may not be emulsified, and is preferably emulsified. When the composition of the present invention is emulsified, the properties thereof become uniform, which in turn suppresses unevenness in frying when the frozen gyoza dumpling of the present invention is heated, and can uniformly impart the obtained gyoza dumpling with preferable texture and appearance. The method for emulsifying the composition of the present invention is not particularly limited, and a method known per se or a method analogous thereto can be used.

While the form of the composition of the present invention is not particularly limited, it is preferably non-solid at ordinary temperature (25°C). In the present invention, being "non-solid" at ordinary temperature (25°C) means being flowable at ordinary temperature (25°C), and examples of the form include liquid, slurry, paste and the like.

The composition of the present invention may be heated in advance before freezing, where the heating is different from heat cooking that renders frozen gyoza dumpling suitable for eating, or may be substantially unheated. When the composition of the present invention is heated, the heating method is not particularly limited and, for example, heating by steaming and the like can be mentioned. Also, the heating conditions (e.g., heating temperature, heating time etc.) are not particularly limited and can be appropriately set according to the heating method and the like. The heating temperature is generally 70 - 120°C, preferably 90 - 100°C, and the heating time is generally 1 - 30 min, preferably 5 - 10 min. The composition of the present invention is attached in a frozen state to a frozen gyoza dumpling, heat cooked together with the frozen gyoza dumpling when it is heat cooked to a state suitable for eating as mentioned below, and forms wings on the fried surface and its surrounding area of the gyoza dumpling after heat cooking. Therefore, when the composition of the present invention is heated in advance before freezing, the heating conditions (e.g., heating temperature, heating time, and the like) are preferably adjusted such that the moisture of the composition of the present invention is not excessively evaporated to cause solidification and the like.

In the present invention, that the composition of the present invention is "substantially unheated" means that the composition of the present invention is not heated at all, or lightly heat treated such that the modified starch, grain-derived protein contained in composition of the present invention are not denatured by heat.

The composition of the present invention may be for formation of a gyoza dumpling wing. In the present invention, the composition for "formation of a gyoza dumpling wing" refers to a composition to be the source of the wing of gyoza dumpling, and the composition can form wings on the fried surface and its surrounding area of gyoza dumplings by heat cooking (e.g., steaming, frying, and the like) the composition together with the gyoza dumpling to evaporate the moisture in the composition, and the like. In the present invention, the "wing" of a gyoza dumpling refers to a thin film-like part with crispy texture which is formed on the fried surface and its surrounding area of gyoza dumpling by heat cooking (e.g., steaming, frying, etc.) an aqueous liquid containing given components such as protein, starch and the like (e.g., batter liquid, etc.) together with the gyoza dumpling, and the like. It is also generally referred to as "BARI" and the like.

The composition of the present invention may be used as a batter liquid.

The gyoza dumpling to which the composition of the present invention is attached is not particularly limited and, for example, the shape, size of the gyoza dumpling, components constitution, amount of filling and the outer skin, and the like may be appropriately determined according to the desired gyoza dumpling. The production methods of the filling and the outer skin, how to wrap the filling and the like can be performed according to a method known per se or a method analogous thereto. As the filling and the outer skin, commercially available products may be used, or commercially available gyoza dumplings may also be used.

The gyoza dumpling to which the composition of the present invention is attached may be a raw gyoza dumpling (that is, gyoza dumpling obtained by wrapping a filling with the outer skin and before heating), or heated gyoza dumpling (that is, gyoza dumpling subjected to heat treatment). When a heated gyoza dumpling is used, the heating method thereof is not particularly limited and, for example, heating by steaming and the like can be mentioned. Also, the heating conditions (e.g., heating temperature, heating time, and the like) are not particularly limited and can be appropriately set according to the heating method and the like. The heating temperature is generally 70 - 120°C, preferably 90 - 100°C, and the heating time is generally 1 - 30 min, preferably 5 - 10 min. When the gyoza dumpling to which the composition of the present invention is attached is a heated gyoza dumpling, and the composition of the present invention is also heated, they can be heated simultaneously.

The gyoza dumpling to which the composition of the present invention is attached may be subjected to a treatment conventionally used for frozen gyoza dumplings (e.g., treatment to deactivate enzymes contained in vegetables and the like in the filling, and the like) as appropriate as long as the purpose of the present invention is not impaired.

The method for attaching the composition of the present invention in a frozen state to the frozen gyoza dumpling of the present invention is not particularly limited, and a method known per se or a method analogous thereto can be used. For example, frozen gyoza dumplings with the composition of the present invention in a frozen state attached thereto can be obtained by filling the composition of the present invention in a container (e.g., tray, etc.), disposing gyoza dumplings such that at least a part of the outer skin comes into contact with the composition, and applying a freezing treatment in this state, and the like. In addition, frozen gyoza dumplings with the composition of the present invention in a frozen state attached thereto can also be obtained by separately subjecting the composition of the present invention and the gyoza dumplings to a freezing treatment, and adhering the obtained frozen substances to each other.

The freezing treatment of the gyoza dumpling and the composition of the present invention are not particularly limited and may be performed according to a method known per se or a method analogous thereto. The freezing temperature is generally not more than -10°C, preferably not more than -15°C.

The amount of the composition of the present invention attached to the frozen gyoza dumpling of the present invention is preferably 16 - 40 parts by weight, more preferably 18 - 35 parts by weight, further preferably 18 - 30 parts by weight, still more preferably 20 - 28.5 parts by weight, particularly preferably 24 - 28 parts by weight, per 100 parts by weight of the gyoza dumpling, because when the frozen gyoza dumpling of the present invention is heated, the filling can be heated appropriately without overheating or uneven heating, and the outer skin of the gyoza dumpling can have a preferable texture.

In the frozen gyoza dumpling of the present invention, preferably, the composition of the present invention is attached to at least the surface to be fried of the gyoza dumpling. In the present invention, the "surface to be fried" of the gyoza dumpling refers to a surface that is in contact with (e.g., via batter liquid, and the like when desired) or in close proximity to a cooking device (e.g., frying pan, iron plate, hot plate, etc.) during heat cooking (e.g., steaming and frying) using the cooking device so that a fried mark (burnt mark) is imparted by the cooking. In the frozen gyoza dumpling of the present invention, the composition of the present invention may be attached to the entire surface to be fried, or may be attached to a part of the surface to be fried. The composition of the present invention may be attached not only to the surface to be fried of the gyoza dumpling but also to the side surface extending from the surface to be fried.

The frozen gyoza dumpling of the present invention may be provided in a container (e.g., tray, etc.). The container for housing the frozen gyoza dumpling of the present invention is not particularly limited, and a conventional container may be used. For example, the containers and trays described in WO 2014/007387, WO 2016/19882 or the like may be used. The frozen gyoza dumpling of the present invention may be provided in an outer packaging bag or the like instead of a container.

The method of cooking the frozen gyoza dumpling of the present invention is not particularly limited, and a method conventionally used as a cooking method of frozen gyoza dumplings may be used. However, a method that can form wings on the gyoza dumplings after cooking is preferable. For example, a method including heating (e.g., heating by steaming, heating by frying) gyoza dumplings using a cooking device (e.g., frying pan, iron plate, hot plate, etc.) and the like can be mentioned. When the frozen gyoza dumpling of the present invention is heated using a cooking device, it is preferable to not add water during the heating. By not adding water when heating with a cooking device, the dumplings are heated mainly from the surface to be fried without being heated by the surrounding boiling water. Consequently, a preferable texture can be achieved without damaging the elasticity of the outer skin. Also, the texture of the filling of the gyoza dumpling can be favorable because they are mainly heated from the surface to be fried, which in turn prevents flow out of the juice due to overheating. In addition, when the frozen gyoza dumpling of the present invention is heated using a cooking device, it is preferable to not add oil during heating. By not adding oil when heating with a cooking device, the heating operation can be facilitated, the generation of oil splash can be suppressed, and burns and the like can be prevented.

When the frozen gyoza dumpling of the present invention is cooked so as to be in a state suitable for eating, the composition of the present invention attached in a frozen state to the frozen gyoza dumpling is also heat cooked, and the wing is formed on the fried surface and its surrounding area of the gyoza dumpling after heat cooking.

According to the frozen gyoza dumpling of the present invention, a gyoza dumpling with a good wing (gyoza dumpling with wing) that easily spreads on a cooking device (e.g., frying pan, iron plate, hot plate etc.) or the like when heating with the cooking device, does not easily break during peeling off from the cooking device after cooking, and does not easily soften when placed with the fried surface facing upward can be obtained.

In the present invention, the "easiness of spreading" of the wing of gyoza dumpling specifically refers to the easiness of spreading of a liquid which is the source of wings (e.g., batter liquid, etc.) when a frozen gyoza dumpling is heated by a cooking device (frying pan, iron plate, hot plate, etc.). The easiness of spreading of the wing of gyoza dumpling can be evaluated, for example, by sensory evaluation and the like by an expert panel. Specifically, a frozen substance of a liquid which is the source of wing is heated on a hot plate, and the degree of spreading at that time can be evaluated by visual evaluation or the like.

In the present invention, the "resistance to breakage" of a wing of gyoza dumpling specifically refers to the wing of the gyoza dumpling that does not easily break when the wing is peeled off from a cooking device (frying pan, iron plate, hot plate, etc.) after a frozen gyoza dumpling is heated by the cooking device. The resistance to breakage of the wing of a gyoza dumpling can be evaluated, for example, by sensory evaluation and the like by an expert panel. Specifically, a frozen substance of a liquid which is the source of wing is baked on a hot plate, the obtained baked substance (wing evaluation model) is detached from the hot plate, and the degree of breakage of the wing at that time is evaluated by visual observation, and the like.

In the present invention, that the wing of a gyoza dumpling "softens" refers to bending of the wing of the gyoza dumpling over time. The "resistance to softening" of the wing of a gyoza dumpling specifically refers to difficulty in bending of the wing when a gyoza dumpling obtained heating a frozen gyoza dumpling is placed with the fried surface and the created wings facing upward. The resistance to softening of the wing of a gyoza dumpling can be evaluated, for example, by sensory evaluation and the like by an expert panel. Specifically, a frozen substance of a liquid which is the source of wing is baked in a circular mold on a hot plate to give a circular baked substance (wing evaluation model), and a half of the baked substances are fixed on a table and left standing. After a predetermined time from the standing, the degree of curvature of the baked substance is evaluated by visual observation, whereby the evaluation can be performed.

The present invention also provides a composition to be attached to a gyoza dumpling. The composition to be attached to a gyoza dumpling of the present invention is to the same as the composition of the present invention (mentioned above) and preferred embodiments are also the same.

The composition "to be attached to a gyoza dumpling" in the present invention is a composition to be attached to the outer skin of the gyoza dumpling, and is different from the composition to be added to a filling when preparing the filling of a gyoza dumpling.

The present invention also provides a production method of a gyoza dumpling with wing. One of the characteristics of the production method of the gyoza dumpling with wing of the present invention is that it includes heating a gyoza dumpling with a composition of the present invention attached thereto. The gyoza dumpling to which the composition of the present invention is attached is not particularly limited, and those similar to the gyoza dumpling used in the frozen gyoza dumpling of the present invention can be used. Also, the heating method of the gyoza dumpling is not particularly limited and, for example, a cooking device (e.g., frying pan, iron plate, hot plate, etc.) is used for heating as in the frozen gyoza dumpling of the present invention.

The production method of the gyoza dumpling with wing of the present invention may include heating a frozen gyoza dumpling to which the composition of the present invention in a frozen state is attached, or may include heating a gyoza dumpling to which the composition of the present invention in an unfrozen state is attached. When the composition of the present invention is used in an unfrozen state, the composition may be attached to the gyoza dumpling before heating the gyoza dumpling, or may be added and attached to the dumpling while it is heated in a cooking device.

The present invention is explained in more detail in the following Examples; however, the present invention is not limited by these Examples.

### [Example]

### <Experimental Example 1>

### (Preparation of compositions of Experimental Plots 1 - 18)

Water, oil, powdery materials shown in Table 2 and an emulsifier (lecithin) at the proportion shown in Table 1 were stirred using ULTRA-TURRAX (manufactured by IKA) (stirring conditions: 6000 rpm, 8 min) to prepare the compositions (batter liquid) of Experimental Plots 1 - 18.

**[Table 1]**

| material name | proportion (wt%) |
|---|---|
| water | 78.00 |
| oil | 14.40 |
| various powdery materials of Table 2 | 7.50 |
| emulsifier | 0.10 |
| total | 100.0 |

### (Freezing compositions of Experimental Plots 1 - 18)

The compositions of Experimental Plots 1 - 18 were each placed in a tray (2.5 cm×7 cm) by 5 g, heated by steaming at 95°C for 7 min, and rapidly frozen (freezing conditions: -35°C, 60 min) to give frozen substances of the compositions of Experimental Plots 1 - 18(frozen substances of batter liquid).

### (Measurement of viscosity of powdery material)

The viscosity of the powdery materials shown in Table 2 was measured by the following method (method A).

Each powdery material was added to water at a concentration of 5 wt% to prepare a suspension (total amount 100 mL). The suspension was heated to 90°C, held for 10 min, after which evaporate moisture was supplemented, and the mixture was cooled to 50°C in a warm bath, and the viscosity at the temperature was measured by a B-type viscometer (manufactured by BROOKFIELD, digital viscometer LR99102). The measurement was performed using a No. 1 rotor at a rotation speed of 20 rpm 30 seconds after the start of rotation.

### (Evaluation of compositions of Experimental Plots 1 - 18)

(1) Spreadability of wing, (2) resistance to breakage of wing and (3) resistance to softening of wing made of the compositions of Experimental Plots 1 - 18 were each evaluated by the following procedures.

### (1) Spreadability of wing

The frozen substances (5 g) of the compositions of Experimental Plots 1 - 18 were baked on a hot plate (heating conditions: 95°C, 7 min), and the spread of the compositions at that time was sensory-evaluated by a panel of 5 experts, and graded in increments of one point based on the following criteria.

### [Grades of spreadability of wing]

1 point: extremely difficult to spread
3 points: hard to spread
5 points: slightly difficult to spread
7 points: spreads easily
10 points: extremely spreadable

### (2) Resistance to breakage of wing

The frozen substances (5 g) of the compositions of Experimental Plots 1 - 18 were baked on a hot plate (heating conditions: 95°C, 7 min), and the obtained baked substances of the compositions of Experimental Plots 1 - 18 were detached from the hot plate using a turner. Each detached baked substance was sensory-evaluated by a panel of 5 experts, and graded in increments of one point based on the following criteria.

### [Grades of resistance to breakage of wing]

1 point: extremely easy to break (completely broken)
3 points: easy to break
5 points: rather easy to break
7 points: difficult to break
10 points: extremely difficult to break

### (3) Resistance to softening of wing

The frozen substance (10 g) of the compositions of Experimental Plots 1 - 18 were baked in a 9.5 cm diameter circular mold on a hot plate (heating conditions: 95°C, 7 min) to give circular baked substances (diameter 9.5 cm) of the compositions of Experimental Plots 1 - 18. A half of the baked substances were fixed on a table and left standing under the condition of room temperature 20 - 25°C. After 1 hr of standing, they were sensory-evaluated by a panel of 5 experts, and graded in increments of one point based on the following criteria.

### [Grades of resistance to softening of wing]

1 point: extremely easy to soften
3 points: easy to soften
5 points: rather easy to soften
7 points: difficult to soften
10 points: extremely difficult to soften (absence of softening)

The results are shown in Table 2.

**[Table 2]**

| Experimental Plot | powdery material | viscosity (mPa•s) | spreadability | resistance to breakage | resistance to softening |
|---|---|---|---|---|---|
| 1 | rice flour | 10 | 2 | 6 | ND |
| 2 | glutinous rice flour | 3000 | 1 | 6 | ND |
| 3 | wheat flour | 15.6 | 2 | 8 | ND |
| 4 | corn starch | 57.3 | 1 | 6 | ND |
| 5 | waxy corn starch | 4600 | 1 | 6 | ND |
| 6 | potato starch | 32800 | 1 | 6 | ND |
| 7 | tapioca starch | 3630 | 1 | 6 | ND |
| 8 | distarch phosphate (derived from tapioca) | 13 | 1 | 4 | ND |
| 9 | distarch phosphate (derived from tapioca) | 2.2 | 9 | 1 | ND |
| 10 | acid-treated starch (derived from waxy corn) | 2.5 | 8 | 4 | 4 |
| 11 | acid-treated starch (derived from waxy corn) | 54.9 | 2 | 8 | 8 |
| 12 | acid-treated starch (derived from corn) | 4.8 | 8 | 4 | 4 |
| 13 | acid-treated starch (derived from corn) | 65.4 | 1 | 8 | 1 |
| 14 | heat-moisture treated starch (derived from high-amylose corn) | 1.5 | 8 | 4 | 3 |
| 15 | heat-moisture treated starch (derived from waxy corn) | 3.5 | 8 | 3 | 1 |
| 16 | oxidized starch (derived from potato) | 2.3 | 8 | 4 | 4 |
| 17 | oxidized starch (derived from potato) | 9.9 | 2 | 8 | 8 |
| 18 | acetylated oxidized starch (derived from tapioca) | 4.6 | 8 | 2 | 5 |

As is clear from the results shown in Table 2, the compositions using modified starch having a particular viscosity measured by the aforementioned method A (compositions of Experimental Plots 9, 10, 12, 14 - 16 and 18) easily spread on the hot plate when heated on the hot plate.

Since the compositions of Experimental Plots 1 - 8 did not spread on the hot plate, the resistance to softening of wing could not be evaluated. Since the composition of Experimental Plot 9 was brittle and crumbled when peeled from the hot plate, the resistance to softening of wing could not be evaluated.

### <Experimental Example 2>

### (Preparation of compositions of Experimental Plots 19 - 28)

Water, oil, acid-treated starch used in Experimental Plot 10, an emulsifier (lecithin) and the protein materials shown in Table 4 at the proportion shown in Table 3 were stirred using ULTRA-TURRAX (manufactured by IKA) (stirring conditions: 6000 rpm, 8 min) to prepare the compositions (batter liquid) of Experimental Plots 19 - 28.

**[Table 3]**

| material name | proportion (wt%) |
|---|---|
| water | 77.90 |
| oil | 14.00 |
| acid-treated starch used in Experimental Plot 10 | 7.50 |
| emulsifier | 0.10 |
| various protein materials of Table 4 | 0.50 |
| total | 100.0 |

### (Freezing compositions of Experimental Plots 19 - 28)

In the same manner as in Experimental Example 1, frozen substances of the compositions of Experimental Plots 19 - 28 were obtained.

### (Evaluation of compositions of Experimental Plots 19 - 28)

(1) Spreadability of wing, (2) resistance to breakage of wing and (3) resistance to softening of wing made of the compositions of Experimental Plots 19 - 28 were each evaluated by the same procedures as those in Experimental Example 1.

The results are shown in Table 4.

**[Table 4]**

| Experimental Plot | protein material | spreadability | resistance to breakage | resistance to softening |
|---|---|---|---|---|
| 19 | soybean protein | 8 | 8 | 8 |
| 20 | wheat protein | 7 | 6 | 6 |
| 21 | egg-derived protein | 5 | 5 | 5 |
| 22 | gelatin (derived from pig) | 8 | 4 | 4 |
| 23 | corn protein | 6 | 7 | 6 |
| 24 | green pea protein | 5 | 2 | 8 |
| 25 | porcine plasma protein | 8 | 8 | 8 |
| 26 | Enoki mushroom protein | 6 | 7 | 8 |
| 27 | lactoprotein | 6 | 8 | 8 |
| 28 | gelatin (derived from cattle) | 5 | 7 | 4 |

As is clear from the results shown in Table 4, the compositions using soybean protein, wheat protein, corn protein, porcine plasma protein, Enoki mushroom protein, lactoprotein together with modified starch having a particular viscosity as measured by the aforementioned method A(compositions of Experimental Plots 19, 20, 23, 25, 26, 27) were improved in the resistance to breakage of wing and the resistance to softening of wing. It was confirmed that these compositions easily spread on a cooking device when heated on the cooking device, do not easily break during peeling off from the cooking device after cooking, and do not easily soften when placed with the fried surface facing upward.

### <Experimental Example 3>

### (Preparation of compositions of Experimental Plots 29 - 35)

Water, oil, acid-treated starch used in Experimental Plot 10, an emulsifier (lecithin) and soybean protein at the proportion shown in Tables 5 and 6 were stirred using ULTRA-TURRAX (manufactured by IKA) (stirring conditions: 6000 rpm, 8 min) to prepare the compositions (batter liquid) of Experimental Plots 29 - 35.

**[Table 5]**

| material name | proportion (wt%) |
|---|---|
| oil | 14.00 |
| acid-treated starch used in Experimental Plot 10 | 1 - 15 |
| | (proportion in Table 6) |
| emulsifier | 0.10 |
| soybean protein | 0.50 |
| water | balance |
| total | 100.0 |

### (Freezing compositions of Experimental Plots 29 - 35)

In the same manner as in Experimental Example 1, frozen substances of the compositions of Experimental Plots 29 - 35 were obtained.

### (Evaluation of compositions of Experimental Plots 29 - 35)

(1) Spreadability of wing, (2) resistance to breakage of wing and (3) resistance to softening of wing made of the compositions of Experimental Plots 29 - 35 were each evaluated by the same procedures as those in Experimental Example 1.

The results are shown in Table 6.

**[Table 6]**

| Experimental Plot | content (wt%) of acid-treated starch | spreadability | resistance to breakage | resistance to softening |
|---|---|---|---|---|
| 29 | 1 | 9 | 5 | 3 |
| 30 | 2 | 9 | 5 | 5 |
| 31 | 3 | 9 | 6 | 6 |
| 32 | 5 | 9 | 7 | 6 |
| 33 | 7.5 | 8 | 8 | 8 |
| 34 | 10 | 7 | 8 | 8 |
| 35 | 15 | 4 | 9 | 8 |

As is clear from the results shown in Table 6, the compositions in which the content of modified starch having a particular viscosity as measured by the aforementioned method A is 2 - 10 wt% (compositions of Experimental Plots 30 - 34) were superior in all of the spreadability of wing, resistance to breakage of wing, and resistance to softening of wing.

### <Experimental Example 4>

### (Preparation of compositions of Experimental Plots 36 - 42)

Water, oil, acid-treated starch used in Experimental Plot 10, an emulsifier (lecithin) and soybean protein at the proportion shown in Tables 7 and 8 were stirred using ULTRA-TURRAX (manufactured by IKA) (stirring conditions: 6000 rpm, 8 min) to prepare the compositions (batter liquid) of Experimental Plots 36 - 42.

**[Table 7]**

| material name | proportion (wt%) |
|---|---|
| oil | 14.00 |
| acid-treated starch used in Experimental Plot 10 | 7.50 |
| emulsifier | 0.10 |
| soybean protein | 0.1 - 5.0 (proportion in Table 8) |
| water | balance |
| total | 100.0 |

### (Freezing compositions of Experimental Plots 36 - 42)

In the same manner as in Experimental Example 1, frozen substances of the compositions of Experimental Plots 36 - 42 were obtained.

### (Evaluation of compositions of Experimental Plots 36 - 42)

(1) Spreadability of wing, (2) resistance to breakage of wing and (3) resistance to softening of wing made of the compositions of Experimental Plots 36 - 42 were each evaluated by the same procedures as those in Experimental Example 1.

The results are shown in Table 8.

**[Table 8]**

| Experimental Plot | content (wt%) of soybean protein | spreadability | resistance to breakage | resistance to softening |
|---|---|---|---|---|
| 36 | 0.1 | 8 | 5 | 4 |
| 37 | 0.3 | 8 | 7 | 7 |
| 38 | 0.5 | 8 | 8 | 8 |
| 39 | 1.0 | 7 | 8 | 8 |
| 40 | 2.0 | 7 | 9 | 9 |
| 41 | 3.0 | 7 | 9 | 9 |
| 42 | 5.0 | 5 | 9 | 9 |

As is clear from the results shown in Table 8, the compositions in which the content of protein is 0.3 - 3 wt% (compositions of Experimental Plots 37 - 41) were superior in all of the spreadability of wing, resistance to breakage of wing, and resistance to softening of wing.

### <Experimental Example 5>

### (Preparation of compositions of Experimental Plot 43)

Water, oil, acid-treated starch used in Experimental Plot 10, an emulsifier (lecithin) and soybean protein at the proportion shown in Table 9 were stirred using ULTRA-TURRAX (manufactured by IKA) (stirring conditions: 6000 rpm, 8 min) to prepare the compositions (batter liquid) of Experimental Plot 43.

**[Table 9]**

| material name | proportion (wt%) |
|---|---|
| water | 77.90 |
| oil | 14.00 |
| acid-treated starch used in Experimental Plot 10 | 7.50 |
| emulsifier | 0.10 |
| soybean protein | 0.50 |
| total | 100.0 |

### (Making raw gyoza dumpling)

ground meat (mixture of ground pork meat and ground chicken meat, 260 g), vegetable (mixture of chopped cabbage, onion, Chinese chive, garlic, 550 g), egg white (25 g), sesame oil (20 g), sake (10 g), spice and seasoning (32 g, total amount of spice and seasoning) were mixed to prepare the filling. The obtained filling (12 g) was wrapped with commercially available gyoza dumpling skin (1 sheet: 5 g) to make raw gyoza dumplings (weight of one raw gyoza dumpling: 17 g).

### (Making frozen gyoza dumpling)

Using the composition of Experimental Plot 43, frozen gyoza dumplings with the composition attached in a frozen state to the surface to be fried were made.

For making the frozen gyoza dumpling, a tray with a concave part was used. Specifically, the composition of Experimental Plot 43 was filled in the concave part of the tray in the amount (2.5 - 7 g) shown in Table 10 below. Then, raw gyoza dumpling (weight of one raw gyoza dumpling: 17 g) was placed in the tray such that the surface to be fried was in contact with the batter liquid filled in the concave part, and steamed at 95°C for 9 min, allowed to cool at 25°C for 10 min, and rapidly frozen in a freezer (inside temperature: - 30°C) while the gyoza dumpling was attached to the batter liquid, whereby the frozen gyoza dumplings of Experimental Plots 44 - 48 were respectively obtained.

### (Sensory evaluation)

Twelve frozen gyoza dumplings from each of Experimental Plots 44 - 48 were placed in a frying pan with a diameter of 26 cm, covered with a lid, and first fried and steamed on medium heat for 5 min. Then the lid was removed and gyoza dumplings were fried on medium heat for 1 min and 30 sec to give gyoza dumplings with wings (winged fried gyoza dumpling), and (1) spreadability of wing, (2) resistance to breakage of wing and (3) resistance to softening of wing of the obtained fried gyoza dumplings were sensory-evaluated by a panel of 5 experts, and graded in increments of one point based on the criteria similar to those in Experimental Example 1.

The results are shown in Table 10.

**[Table 10]**

| Experimental Plot | amount filled in tray (g) | attached amount of composition of Experimental Plot 43 in frozen state per 100 parts by weight of gyoza dumpling (parts by weight) | spreadability | resistance to breakage | resistance to softening |
|---|---|---|---|---|---|
| 44 | 2.5 | 14.7 | 3 | 9 | 9 |
| 45 | 3.5 | 20.6 | 6 | 8 | 8 |
| 46 | 5 | 29.4 | 7 | 7 | 7 |
| 47 | 5.5 | 32.4 | 8 | 6 | 6 |
| 48 | 7 | 41.2 | 9 | 4 | 3 |

As is clear from the results shown in Table 10, the frozen gyoza dumplings (frozen gyoza dumplings of Experimental Plots 45 - 47) in which the attached amount of the composition of Experimental Plot 43 in a frozen state is 20.6 - 32.4 parts by weight per 100 parts by weight of the gyoza dumpling were superior in all of the spreadability of wing, resistance to breakage of wing, and resistance to softening of wing.

### <Experimental Example 6>

### (Preparation of compositions of Experimental Plots 49 - 53)

Water, oil, acid-treated starch used in Experimental Plot 10, an emulsifier (lecithin) and soybean protein at the proportion shown in Tables 11 and 12 were stirred using ULTRA-TURRAX (manufactured by IKA) (stirring conditions: 6000 rpm, 8 min) to prepare the compositions (batter liquid) of Experimental Plots 49 - 53.

**[Table 11]**

| material name | proportion (wt%) |
|---|---|
| water | 69.9 - 87.9 |
| | (proportion in Table 12) |
| oil | 6.0 - 24.0 |
| | (proportion in Table 12) |
| acid-treated starch used in Experimental Plot 10 | 5 |
| emulsifier | 0.10 |
| soybean protein | 1 |
| total | 100.0 |

### (Freezing compositions of Experimental Plots 49 - 53)

In the same manner as in Experimental Example 1, frozen substances of the compositions of Experimental Plots 49 - 53 were obtained.

### (Evaluation of compositions of Experimental Plots 49 - 53)

(1) Spreadability of wing, (2) resistance to breakage of wing and (3) resistance to softening of wing made of the compositions of Experimental Plots 49 - 53 were each evaluated by the same procedures as those in Experimental Example 1.

The results are shown in Table 12.

**[Table 12]**

| Experimental Plot | content of water (wt%) | oil content (wt%) | spreadability | resistance to breakage | resistance to softening |
|---|---|---|---|---|---|
| 49 | 87.9 | 6.0 | 7 | 6 | 6 |
| 50 | 83.9 | 10.0 | 10 | 7 | 6 |
| 51 | 79.9 | 14.0 | 9 | 8 | 7 |
| 52 | 73.9 | 20.0 | 9 | 7 | 6 |
| 53 | 69.9 | 24.0 | 7 | 6 | 6 |

As is clear from the results shown in Table 12, all compositions of Experimental Plots 49 - 53 were superior in all of the spreadability of wing, resistance to breakage of wing, and resistance to softening of wing.

### <Experimental Example 7>

### (Preparation of compositions of Experimental Plots 54 - 56)

Water, oil, powdery materials shown in Table 14, an emulsifier (lecithin) and soybean protein at the proportion shown in Tables 13 and 14 were stirred using ULTRA-TURRAX (manufactured by IKA) (stirring conditions: 6000 rpm, 8 min) to prepare the compositions (batter liquid) of Experimental Plots 54 - 56.

**[Table 13]**

| material name | proportion (wt%) |
|---|---|
| oil | 14.00 |
| various powdery materials of Table 14 | 7.50 |
| emulsifier | 0.10 |
| soybean protein | 0.5 or 1.0 |
| | (proportion in Table 14) |
| water | balance |
| total | 100.0 |

### (Freezing compositions of Experimental Plots 54 - 56)

In the same manner as in Experimental Example 1, frozen substances of the compositions of Experimental Plots 54 - 56 were obtained.

### (Evaluation of compositions of Experimental Plots 54 - 56)

(1) Spreadability of wing, (2) resistance to breakage of wing and (3) resistance to softening of wing made of the compositions of Experimental Plots 54 - 56 were each evaluated by the same procedures as those in Experimental Example 1.

The results are shown in Table 14.

**[Table 14]**

| Experimental Plot | powdery material | viscosity (mPa•s) | content (wt%) of soybean protein | spreadability | resistance to breakage | resistance to softening |
|---|---|---|---|---|---|---|
| 54 | acid-treated starch (derived from waxy corn) | 2.5 | 0.5 | 8 | 8 | 8 |
| 55 | oxidized starch (derived from potato) | 2.3 | 1.0 | 7 | 6 | 6 |
| 56 | acetylated oxidized starch (derived from tapioca) | 4.6 | 1.0 | 7 | 6 | 6 |

As is clear from the results shown in Table 14, it was confirmed that modified starch is superior in all of the spreadability of wing, resistance to breakage of wing and resistance to softening of wing as long as it has the particular viscosity measured by the aforementioned method A, even when the materials and the processing method are changed.

### [Industrial Applicability]

According to the present invention, a frozen gyoza dumpling that can afford a gyoza dumpling having a good wing (gyoza dumpling with wing) that easily spreads on a cooking device when heating with the cooking device, etc., does not easily break during peeling off from the cooking device after cooking, and does not easily soften when placed with the fried surface facing upward and a production method thereof can be provided.

According to the present invention, a composition that can be preferably used for forming the aforementioned good wing of a gyoza dumpling (composition to be attached to gyoza dumpling, preferably composition for forming gyoza dumpling wing) can be provided.

According to the present invention, a production method of a gyoza dumpling having the aforementioned good wings (gyoza dumpling with wing) can be provided.

This application is based on a patent application No. 2018-124136 filed in Japan (filing date: June 29, 2018), the contents of which are incorporated in full herein.

## Claims

1. A frozen gyoza dumpling with a composition attached thereto in a frozen state, the composition comprising a modified starch having a viscosity of less than 5 mPa•s as measured by the following method (hereinafter to be referred to as method A), and
a protein:
viscosity measurement method:
modified starch is added to water to a concentration of 5 wt%, the mixture is heated to 90°C, maintained for 10 min, cooled to 50°C, and the viscosity at said temperature is measured using a B-type viscometer.

2. The frozen gyoza dumpling according to claim 1, wherein the aforementioned protein is at least one selected from the group consisting of a soybean protein, a wheat protein, a corn protein, a porcine plasma protein, an Enoki mushroom protein and a lactoprotein.

3. The frozen gyoza dumpling according to claim 1 or 2, wherein the aforementioned protein is at least one selected from the group consisting of a soybean protein and a wheat protein.

4. The frozen gyoza dumpling according to any one of claims 1 to 3, wherein the aforementioned modified starch is at least one selected from the group consisting of an acid-treated starch, an oxidized starch and an acetylated oxidized starch.

5. The frozen gyoza dumpling according to any one of claims 1 to 3, wherein the aforementioned modified starch is an acid-treated starch.

6. The frozen gyoza dumpling according to any one of claims 1 to 5, wherein a content of the aforementioned modified starch in the aforementioned composition is 1.5 - 12 wt%.

7. The frozen gyoza dumpling according to any one of claims 1 to 6, wherein a content of the protein in the aforementioned composition is 0.2 - 4 wt%.

8. The frozen gyoza dumpling according to any one of claims 1 to 7, wherein the aforementioned composition further comprises water, an oil and an emulsifier.

9. The frozen gyoza dumpling according to any one of claims 1 to 8, wherein the aforementioned composition is for forming a wing of a gyoza dumpling.

10. A method for producing a frozen gyoza dumpling comprising freezing a gyoza dumpling with a composition attached thereto, the composition comprising a modified starch having a viscosity of less than 5 mPa•s as measured by the following method (hereinafter to be referred to as method A), and
a protein:
viscosity measurement method:
modified starch is added to water to a concentration of 5 wt%, the mixture is heated to 90°C, maintained for 10 min, cooled to 50°C, and the viscosity at said temperature is measured using a B-type viscometer.

11. A composition to be attached to a gyoza dumpling, the composition comprising a modified starch having a viscosity of less than 5 mPa•s as measured by the following method (hereinafter to be referred to as method A), and
a protein:
viscosity measurement method:
modified starch is added to water to a concentration of 5 wt%, the mixture is heated to 90°C, maintained for 10 min, cooled to 50°C, and the viscosity at said temperature is measured using a B-type viscometer.

12. A method for producing a gyoza dumpling with wing comprising heating a gyoza dumpling with a composition attached thereto, the composition comprising a modified starch having a viscosity of less than 5 mPa•s as measured by the following method (hereinafter to be referred to as method A), and
a protein:
viscosity measurement method:
modified starch is added to water to a concentration of 5 wt%, the mixture is heated to 90°C, maintained for 10 min, cooled to 50°C, and the viscosity at said temperature is measured using a B-type viscometer.
